# EUROPÄISCHE PATENTSCHRIFT

(11) **EP 0 729 991 B1**
(45) Veröffentlichungstag und Bekanntmachung des Hinweises auf die Patenterteilung: **02.05.2001**
(21) Anmeldenummer: 96102130.0
(22) Anmeldetag: 13.02.1996
(51) Int. Cl.: C08G 18/75, C08G 18/66, C08G 18/42, C08G 18/08, C09D 175/06

(54) **Wässrige Bindemittel auf Polyester-Polyurethan-Basis**
Aqueous binder based on polyester-polyuréthane
Liant aqueux à base de polyester-polyuréthane

(30) Priorität: 27.02.1995 DE 19506736
(43) Veröffentlichungstag der Anmeldung: 04.09.1996
(73) Patentinhaber: BAYER AG, 51368 Leverkusen (DE)
(72) Erfinder: Blum, Harald, Dr., D-47669 Wachtendonk (DE); Pedain, Josef, Dr., D-51061 Köln (DE)

(56) Entgegenhaltungen:
- EP-A- 0 140 323
- EP-A- 0 157 291
- EP-A- 0 379 007
- EP-A- 0 548 845
- US-A- 3 454 505

## Beschreibung

Die Erfindung betrifft neue Dispersionen von Hydroxylgruppen aufweisenden Polyesterpolyurethanen, welche als wesentliche Bausteine 1-Methyl-2,4- und/oder -2,6-diisocyanatocyclohexan in über Urethangruppen eingebauter Form enthalten, ihre Verwendung in Lacken und Beschichtungsmitteln, sowie wäßrige Bindemittelkombinationen auf Basis derartiger Dispersionen und üblichen Vernetzerharzen.

Wäßrige Bindemittel auf Basis von hydrophil modifizierten Polyesterpolyurethanen sind z.B. aus EP-A-0 355 682, EP-A-0 379 007, EP-A-0 427 028, EP-A-0 436 941, EP-A-0 496 205 oder US-A-3 412 054 bekannt.

Aus der EP-A-0 140 323 und der EP-A-0 157 291 sind wässrige Einbrennlacke, die urethanisierte Polyester-Dispersionen in Kombination mit blockierten Polyisocyanaten und/oder Melaminharzen enthalten, bekannt geworden, jedoch lehrt dieser Stand der Technik nicht, durch welche Kombinationen von ausgewählten Inhaltsstoffen besonders lagerstabile Lackformulierungen erhältlich sind.

Die EP-A 0 548 845 beschreibt Mehrschichtlacksysteme, die als Grundierung eine Polyurethandispersion enthalten, die ohne Zusatz eines Härters auf dem Substrat getrocknet wird. Die Lagerstabilität dieser Dispersionen ist nicht zufriedenstellend.

Aus der US-A 3 454 505 ist die Verwendung von H₆TDI zur Herstellung von Polyurethanen aller Art bekannt geworden, ohne dass Erkenntnisse über Lagerstabilitäten von unter dessen Verwendung hergestellten Produkten vermittelt werden.

Die in diesen Veröffentlichungen beschriebenen wäßrigen Dispersionen bzw. Harzlösungen führen in der Regel zu Lacken und Beschichtungen mit einem hochwertigen Eigenschaftsniveau, die je nach Zusammensetzung für unterschiedliche Anwendungen, wie z.B. Einbrennfüller, Einbrenndecklacke, oxidativ trocknende Decklacke oder wäßrige 2-Komponenten-Polyurethanlacke, verwendet werden können.

Jetzt wurde überraschend gefunden, daß wäßrige Dispersionen von Hydroxylgruppen aufweisenden Polyesterpolyurethanen, die als wesentliche Aufbaukomponente 1-Methyl-2,4- und/oder -2,6-diisocyanatocyclohexan in über Urethan- und gegebenenfalls über Harnstoffgruppen eingebauter Form enthalten neben einem hochwertigen Eigenschaftsniveau eine im Vergleich zu den bekannten Systemen besonders gute Viskositätsstabilität bei der Lagerung bzw. der Verarbeitung damit hergestellter Lacke bewirken. Eine derartige, verbesserte Viskositätsstabilität wird in vielen Anwendungsbereichen von wäßrigen Lackbindemitteln gefordert. So ist beispielsweise bei hochwertigen wäßrigen 2-Komponenten-Polyurethansystemen eine möglichst lange Viskositätsstabilität der Reaktionsmischung nach dem Vermischen der beiden Reaktionspartner erforderlich, da durch einen zu schnellen Viskositätsanstieg die Verarbeitungszeit erheblich verkürzt wird. Auch im Falle von einkomponentig zu verarbeitenden Systemen, z.B. solchen, die auf Grund des Vorliegens von olefinisch ungesättigten Kohlenwasserstoffresten zur Lufttrocknung befähigt sind oder von solchen, die als Härter blockierte Polyisocyanate oder Melaminharze enthalten, ist eine verbesserte Viskositätsstabilität erwünscht, damit die wäßrigen Bindemittel und Lacke auch nach längerer Lagerung eine unveränderte Ausgangsviskosität aufweisen und ohne zusätzliche Maßnahmen direkt appliziert werden können.

Gegenstand der Erfindung sind 20 bis 60 gew.-%ige wäßrige Dispersionen mit einer Viskosität bei 23°C von 10 bis 20 000 mPa.s und einem pH-Wert von 5,5 bis 10 eines Polyesterpolyurethans mit einem Molekulargewicht Mw von 1 500 bis 100 000, einer Hydroxylzahl von 20 bis 300 mg KOH/g, einem, einer Säurezahl von 7 bis 70 mg KOH/g entsprechenden Gehalt an, zu 20 bis 100 % neutralisiert als Carboxylatgruppen vorliegenden, Carboxylgruppen und einem Gehalt an Urethangruppen (berechnet als -NHCO-O-, Molekulargewicht = 59) von 2,5 bis 15 Gew.-%, welches Polyesterpolyurethan das zumindest teilweise in der Salzform vorliegende Umsetzungsprodukt darstellt von
a) 50 bis 91 Gew.-% einer Polyesterkomponente, bestehend aus mindestens einem Polyesterpolyol des Hydroxylzahlbereichs 25 bis 350,
b) 7 bis 45 Gew.-% einer Polyisocyanat-Komponente, besteht zumindest zu 50 Gew.-% aus 1-Methyl-2,4- und/oder -2,6-diisocyanatocyclohexan und zum Rest aus anderen organischen Polyisocyanaten des Molekulargewichtsbereichs 140 bis 1 500
   und
c) 2 bis 12 Gew.-% einer (potentiell) anionischen Aufbaukomponente, bestehend aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe
   und gegebenenfalls
d) 0 bis 10 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung
   und/oder gegebenenfalls
e) 0 bis 30 Gew.-% an anderen, von den Komponenten a), c) und d) verschiedenen Aufbaukomponenten mit gegenüber Isocyanatgruppen reaktionsfähigen Wasserstoffatomen des Molekulargewichtsbereichs 62 bis 2 500,
wobei sich die genannten Prozentangaben zu 100 ergänzen.

Gegenstand der Erfindung sind auch derartige wäßrige Dispersionen, in denen das darin enthaltene Polyesterpolyurethan eine Iodzahl nach Wijs von 20 bis 95 aufweist und das Umsetzungsprodukt darstellt aus
a) 68 bis 88 Gew.-% eines Polyesterpolyols, welches das Umsetzungsprodukt ist von
   a1) 25 bis 65 Gew.-% einer Monocarbonsäure-Komponente, bestehend zumindest zu 75 Gew.-% aus mindestens einer zur oxidativen Trocknung befähigten Fettsäure und zum Rest aus anderen Monocarbonsäuren,
   a2) 10 bis 45 Gew.-% einer Polycarbonsäurekomponente, bestehend aus mindestens einer Di-, Tri- und/oder Tetracarbonsäure des Molekulargewichtsbereichs 98 bis 840 und/oder aus mindestens einem Anhydrid einer derartigen Polycarbonsäure
      und
   a3) 22 bis 63 Gew.-% einer Polyolkomponente, bestehend aus mindestens einem 2- bis 4-wertigen Alkohol des Molekulargewichtsbereichs 62 bis 200,
b) 8 bis 23 Gew.-% einer Polyisocyanatkomponente, bestehend zumindest zu 75 Gew.-% aus 1-Methyl-2,4- und/oder -2,6-diisocyanatocyclohexan und zum Rest aus anderen Polyisocyanaten des Molekulargewichtsbereichs 168 bis 318,
c) 4 bis 8 Gew.-% Dimethylolpropionsäure
   und gegebenenfalls
e) 0 bis 10 Gew.-% einer Aufbaukomponente, bestehend aus mindestens einer, von den Verbindungen gemäß a) und c) verschiedenen, Hydroxyl- und/oder Aminogruppen aufweisenden Verbindung des Molekulargewichtsbereichs 62 bis 1200,
wobei sich die unter a1) bis a3) einerseits und die unter a) bis e) andererseits genannten Prozentangaben jeweils zu 100 ergänzen.

Gegenstand der Erfindung ist auch die Verwendung der erfindungsgemäßen wäßrigen Dispersionen, gegebenenfalls in Kombination mit Vernetzerharzen als oder zur Herstellung von 1- oder 2-komponentig zu verarbeitenden Beschichtungsmitteln.

Gegenstand der Erfindung sind schließlich auch wäßrige Bindemittelkombinationen, die im wesentlichen bestehen aus
A) einer wäßrigen Dispersion eines Polyesterpolyurethans der oben genannten Art und
B) einer Härterkomponente, ausgewählt aus der Gruppe bestehend aus
   B1) hydrophoben Polyisocyanaten mit einer Viskosität bei 23°C von 25 bis 5 000 mPa.s und einem NCO-Gehalt von 5 bis 26 Gew.-%,
   B2) eingebaute hydrophile Polyetherketten enthaltenden, hydrophilen Polyisocyanaten mit einem NCO-Gehalt von 4 bis 24 Gew.-%,
   B3) Gemischen der unter B1) und B2) genannten Polyisocyanate,
   B4) Polyisocyanate der unter B1) bis B3) genannten Art mit mit Blockierungsmitteln für Isocyanatgruppen blockierten Isocyanatgruppen,
   B5) Aminovernetzerharzen und
   B6) Gemischen der unter B4) und B5) genannten Vernetzerharzen,
mit der Maßgabe, daß im Falle der Verwendung von gegebenenfalls blockierten Polyisocyanaten als alleinige Vernetzer das Äquivalentverhältnis von gegebenenfalls blockierten Isocyanatgruppen der Komponente B) zu Hydroxylgruppen der Komponente A) bei 0,5:1 bis 5:1 liegt.

Die erfindungsgemäßen wäßrigen Polyesterpolyurethan-Dispersionen weisen vorzugsweise einen Festkörpergehalt (alle Angaben bezüglich des Festkörpergehaltes der erfindungsgemäßen Dispersionen beziehen sich ausschließlich auf (i) Polyesterurethan einerseits und (ii) Wasser und gegebenenfalls vorliegende Lösungsmittel andererseits ohne Berücksichtigung von gegebenenfalls in den Dispersionen vorliegenden Lackhilfsmitteln) von 30 bis 53 Gew.-%, eine Viskosität bei 23°C von 30 bis 5 000 mPa.s und einen pH-Wert von 6 bis 9 auf. Sowohl die obengemachte Angabe bezüglich des pH-Wertes als auch dieser bevorzugte Wert bezieht sich auf die nach Verdünnen mit Wasser auf einen Festkörpergehalt von 10 % ermittelten Werte.

Die in der erfindungsgemäßen Dispersion vorliegenden Polyesterpolyurethane weisen im übrigen folgende Kenndaten auf:

Das nach der Gelpermeationschromatographie unter Verwendung von Polystyrol als geeichtem Standard bestimmbare Molekulargewicht Mw (Gewichtsmittel) liegt bei 1 500 bis 100 000, vorzugsweise 2 000 bis 45 000.

Die Hydroxylzahl liegt bei 20 bis 300, vorzugsweise 25 bis 160 mg KOH/g Substanz.

Der Gehalt an zumindest teilweise neutralisiert vorliegenden sauren Gruppen, insbesondere an zumindest teilweise in Form von Carboxylatgruppen vorliegenden Carboxylgruppen entspricht einer Säurezahl von 7 bis 70, vorzugsweise 10 bis 45 mg KOH/g Substanz. Der Neutralisationsgrad dieser Gruppen liegt bei 20 bis 100, vorzugsweise 50 bis 100 %. Die speziellen erfindungsgemäßen Polyesterpolyurethane, die zur Herstellung von lufttrocknenden, 1-komponentig zu verarbeitenden Beschichtungsmitteln geeignet sind, weisen auf Grund der Mitverwendung von olefinisch ungesättigten Fettsäuren bei ihrer Herstellung, zumindest teilweise konjugierte, die Befähigung zur Lufttrocknung bewirkende Doppelbindungen in einer Gesamtmenge auf, die einer Iodzahl von 20 bis 95, vorzugsweise 30 bis 65 entspricht.

Der Gehalt an Urethangruppen (berechnet als -NH-CO-O- Molekulargewicht = 59) liegt bei 2,5 bis 15, vorzugsweise 5 bis 12,5 Gew.-%. Die in Wasser dispergiert vorliegenden Polyesterpolyurethane stellen zumindest teilweise in der Salzform vorliegende, nach bekannten Methoden des Standes der Technik hergestellte Umsetzungsprodukte von
a) 50 bis 91, vorzugsweise 65 bis 90 und insbesondere 68 bis 88 Gew.-% einer Polyesterkomponente der nachstehend näher beschriebenen Art,
b) 7 bis 45, vorzugsweise 7 bis 30 und insbesondere 8 bis 23 Gew.-% einer Polyisocyanatkomponente der nachstehend näher beschriebenen Art
   und
c) 2 bis 12, vorzugsweise 3 bis 9 und insbesondere 4 bis 8 Gew.-% einer (potentiell) anionischen Aufbaukomponente der nachstehend näher beschriebenen Art
   und gegebenenfalls
d) 0 bis 10, vorzugsweise 0 bis 4 Gew.-% an nichtionisch-hydrophilen Aufbaukomponenten der nachstehend näher beschriebenen Art
   und/oder gegebenenfalls
e) 0 bis 30, vorzugsweise 0 bis 10 und insbesondere 0 bis 7,5 Gew.-% an anderen, von den Komponenten a), c) und d) verschiedenen Aufbaukomponenten des Molekulargewichtsbereichs 62 bis 2 500, vorzugsweise 62 bis 1 200 mit gegenüber Isocyanatgruppen reaktionsfähigen Gruppen dar.

Die Polyesterkomponente a) besteht aus mindestens einem Polyesterpolyol mit einer Hydroxylzahl von 25 bis 350, vorzugsweise 25 bis 270 und einer Säurezahl von maximal 8, vorzugsweise maximal 4. (Alle Angaben bezüglich Hydroxyl- und Säurezahlen beziehen sich stets auf mg KOH/g).

Die Herstellung der Polyester a) erfolgt durch an sich bekannte Polykondensation von
a1) 0 bis 70 Gew.-% einer Monocarbonsäure-Komponente, bestehend aus mindestens einer Monocarbonsäure.
a2) 5 bis 60 Gew.-% einer Polycarbonsäure-Komponente, bestehend aus mindestens einer Di-, Tri- und/oder Tetracarbonsäure und/oder aus mindestens einem Anhydrid einer derartigen Säure,
a3) 10 bis 70 Gew.-% einer Polyolkomponente, bestehend aus mindestens einem, mindestens 2-wertigen, insbesondere 2-, 3- oder 4-wertigen Alkohol
   und gegebenenfalls
a4) 0 bis 30 Gew.-% an sonstigen Aufbaukomponenten
dar, wobei sich die genannten Prozentangaben zu 100 ergänzen.

Die zu den Polyesterpolyolen führende Umsetzung erfolgt gegebenenfalls unter Zuhilfenahme von üblichen Veresterungskatalysatoren vorzugsweise nach dem Prinzip einer Schmelz- oder Azeotropkondensation innerhalb des Temperaturbereichs von 140 bis 240°C.

Bei den Aufgangskomponenten a1) handelt es sich um eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren, wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Dodosansäure, ungesättigte Fettsäuren, wie z.B. Sojaölfettsäure, Ricinusölfettsäure, Sorbinsäure, Erdnußölfettsäure, Konjuenfettsäure, Tallölfettsäure, Sonnenblumenfettsäure, Safflorölfettsäure sowie Gemische dieser oder anderer Monocarbonsäuren.

Bei der Ausgangskomponente a2) handelt es sich um Di-, Tri- und/oder Tetracarbonsäuren bzw. deren Anhydride des Molekulargewichtsbereichs 98 bis 840. Geeignet sind z.B. Phthalsäure-(anhydrid), Isophthalsäure, Terephthalsäure, Tetrahydrophthalsäure(anhydrid), Hexahydrophthalsäure(anhydrid), Maleinsäure(anhydrid), Bernsteinsäure(anhydrid), Fumarsäure, Adipinsäure, Sebacinsäure, Azelainsäure, Dimerfettsäure, Trimerfettsäure, Trimellithsäure(anhydrid), Butantetracarbonsäure und Gemische dieser oder anderer Säuren.

Bei der Ausgangskomponente a3) handelt es sich um Diole, Triole, Tetraole bzw. höherwertige Alkoholkomponenten des Molekulargewichtsberedichs 62 bis 1 200, vorzugsweise 62 bis 200. Geeignet sind z.B. Ethylenglykol, 1,2- und 1,3-Propylenglykol, 1,3-, 1,4-, 2,3-Butandiol, 1,6-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylolpropan, Glycerin, Pentaerythrit, Trimethylpentandiol, Dipentaerythrit, Ditrimethylolpropan, Rizinusöl und Gemische dieser oder anderer mehrwertiger Alkohole.

Bei den gegebenenfalls mitzuverwendenden Ausgangskomponenten a4) handelt es sich um Lactone wie insbesondere ε-Caprolacton oder um Verbindungen mit mindestens einer während der Kondensationsreaktion mit Hydroxyl- oder Carboxylgruppen reaktionsfähigen Amino-, Hydroxyl- und/oder Carboxylgruppen des Molekulargewichtsbereichs 60 bis 266 Beispiele derartiger, der Gruppe a4) zuzurechnender Aufbaukomponenten sind Monoalkohole, wie z.B. n-Hexanol, Cyclohexanol, Decanol, 2-Ethylhexanol, Dodecanol, Octadecanol, natürliche Fettalkoholgemische, wie z.B. ^{®}Ocenol 110/130 (Fa. Henkel), Hydroxycarbonsäuren wie Dimethylolpropionsäure, Milchsäure, Äpfelsäure, Aminoalkohole wie Aminoethanol, Diethanolamin, Aminosäuren wie Aminoessigsäure, Aminohexansäure und/oder Amine wie Ethylendiamin, Diethylentriamin bzw. Gemische derartiger Verbindungen.

Gemäß einer besonders bevorzugten Ausführungsform stellen die Polyesterpolyole a) Umsetzungsprodukte dar aus
a1) 20 bis 65 Gew.-% Monocarbonsäure, die zu mindestens 75 Gew.-% aus mindestens einer oxidativen Trocknung befähigten Fettsäure der oben beispielhaft genannten Art bestehen,
a2) 10 bis 45 Gew.-% Di-, Tri- und/oder Tetracarbonsäuren der oben beispielhaft genannten Art bzw. deren Anhydride,
a3) 12 bis 40 Gew.-% mindestens eines di-, tri- und/oder tetrafunktionellen Alkohols der oben beispielhaft genannten Art.

Bei Verwendung dieser speziellen Polyesterpolyole resultieren letztendlich erfindungsgemäße Polyesterpolyurethane, die die bereits oben angesprochenen lufttrocknenden Eigenschaften aufweisen.

Gemäß einer weiteren erfindungsgemäß bevorzugten Ausführungsform stellen die Polyesterpolyole a) Umsetzungsprodukte dar aus
a1) 0 bis 24 Gew.-% mindestens einer Monocarbonsäure der oben beispielhaft genannten Art, wobei mindestens 50 % der max. 24 Gew.-% in Form von gesättigten bzw. aromatischen Monocarbonsäuren der oben beispielhaft genannten Art vorliegen,
a2) 15 bis 60 Gew.-% Di-, Tri- und/oder Tetracarbonsäuren der oben beispielhaft genannten Art bzw. deren Anhydride, sowie
a3) 22 - 63 Gew.-% mindestens einer di-, tri- und/oder tetrafunktionellen Alkohols der oben beispielhaft genannten Art.

Die Komponente b) besteht aus mindestens einem organischen Polyisocyanat des Molekulargewichtsbereichs 140 bis 1 500, vorzugsweise 168 bis 318, mit der Maßgabe, daß sie zu mindestens 50, vorzugsweise mindestens 75 und besonders bevorzugt zu 100 Gew.-% aus 1-Methyl-2,4-diisocyanatocyclohexan und/oder 1-Methyl-2,6-diisocyanatocyclohexan besteht. Bei diesem erfindungswesentlichen Diisocyanat bzw. Diisocyanatgemisch handelt es sich vorzugsweise um das zuerst genannte 2,4-isomere Diisocyanat oder um dessen technische Gemische mit bis zu 35 Gew.-%, bezogen auf Gemisch, des letztgenannten 2,6-isomeren Diisocyanats. Bei diesen erfindungswesentlichen Diisocyanaten handelt es sich um literaturbekannte Substanzen. Ihre Herstellung gelingt auf besonders elegante Weise durch die in der Deutschen Patentanmeldung P 44 12 327.2 beschriebene Gasphasenphosgenierung.

Neben den letztgenannten erfindungswesentlichen Diisocyanaten kann die Komponente b) auch weitere Polyisocyanate des genannten Molekulargewichtsbereichs enthalten. Beispielhaft genannt seien Hexamethylendiisocyanat (HDI), 1-Isocyanato-3,3,5-trimethyl-5-isocyanatomethyl-cyclohexan (IPDI), 2,4- und/oder 2,6-Diisocyanatotoluol (TDI), 4,4'-Diisocyanatodicyclohexylmethan (H₁₂MDI) und 4,4'-Diisocyanatodiphenylmethan (MDI). Die Polyisocyanatkomponente b) kann auch, allerdings weniger bevorzugt, an sich bekannte Lackpolyisocyanate auf HDI-, IPDI- und/oder TDI-Basis enthalten.

Die Komponente c) besteht aus mindestens einer (potentiell) anionischen Verbindung mit mindestens einer gegenüber Isocyanatgruppen reaktionsfähigen Gruppe. Vorzugsweise handelt es sich bei diesen Verbindungen um mindestens eine, vorzugsweise eine oder zwei Hydroxyl- oder Aminogruppen aufweisende Carbonsäuren oder um Salze derartiger Amino- bzw. Hydroxycarbonsäuren. Geeignete derartige Säuren sind beispielsweise 2,2-Bis(hydroxymethyl)alkancarbonsäuren wie Dimethylolessigsäure, 2,2-Dimethylolpropionsäure, 2,2-Dimethylolbuttersäure oder 2,2-Dimethylolpentansäure, Dihydroxybernsteinsäure, Hydroxypivalinsäure oder um Gemische derartiger Säuren. Vorzugsweise wird als Komponente c) Dimethylolpropionsäure und/oder Hydroxypivalinsäure verwendet. Ebenfalls möglich, jedoch weniger bevorzugt, ist die Verwendung von gegebenenfalls Ethergruppen aufweisenden Sulfonatdiolen der in US-A-4 108 814 beschriebenen Art als anionische Aufbaukomponente c). Die freien Säuregruppen insbesondere Carboxylgruppen stellen die vorstehend genannten "potentiell anionischen" Gruppen dar, während es sich bei den durch Neutralisation mit Basen erhaltenen salzartigen Gruppen, insbesondere Carboxylatgruppen um die vorstehend angesprochenen "anionischen" Gruppen handelt.

Die gegebenenfalls mitzuverwendende Komponente d) besteht aus mindestens einer nichtionisch-hydrophilen Verbindung, die pro Molekül eine oder zwei gegenüber Isocyanatgruppen reaktionsfähige Gruppen, insbesondere Hydroxyl- oder Aminogruppe aufweist. Die Polyetherketten dieser Verbindungen bestehen zumindest zu 80 Gew.-%, vorzugsweise zu 100 Gew.-% aus Ethylenoxideinheiten, wobei neben diesen, den gemachten Ausführungen entsprechend, auch Propylenoxideinheiten vorliegen können. Geeignete derartige nichtionisch-hydrophile Aufbaukomponenten sind beispielsweise Polyethylenglykole mit Molekulargewichten von 300 bis 3 400 (z.B. ^{®}Carbowax 300, 400, 1 000, 1 500, 2 000, 3 400, von Union Carbide), monofunktionelle Polyethylenglykolmonoalkylether mit Molekulargewichten von 350 bis 5 000 (z.B. ^{®}Breox 350, 550, 750 von BP Chemicals; Polyether LB 25, LB 30, LB 40 von Bayer AG), difunktionelle Polyetheramine, wie z.B. ^{®}Jeffamine ED 600, ED 900, ED 4 000 von Texaco, Chemical Company oder monofunktionelle Polyetheramine, wie z.B. ^{®}Jeffamine M 715, M 1 000, M 2070 von Texaco.

Bei der gegebenenfalls mitzuverwendenden Komponente e) handelt es sich um sonstige mono-, di- und/oder trifunktionelle Substanzen des Molekulargewichts 62 bis 2 500, vorzugweise 62 bis 1 200 mit Hydroxyl- und/oder Aminogruppen wie z.B. Ethylenglykol, Propylenglykol, Trimethylolpropan, Ethanolamin, Diethanolamin, Diethylentriamin, Cyclohexanol, Dodecanol und monofunktionelle, ungesättigte Alkohole (^{®}Ocenol, Henkel). Auch höhermolekulare Polyole, die nicht unter die Gruppen a), c) oder d) fallen, wie beispielsweise Polycarbonatdiole der an sich bekannten Art des genannten Molekulargewichtsbereichs kommen als Komponente e) bzw. als Teil der Komponente e) in Betracht.

Die Herstellung der erfindungswesentlichen Polyesterpolyurethane erfolgt entweder in Substanz oder in 40- bis 99-gew.-%iger organischer Lösung, wobei die Komponenten a), c), d) und e), gegebenenfalls in dem Lösungsmittel, vorgelegt und bei Temperaturen von 40 bis 140°C mit der Komponente b) derart zur Reaktion gebracht werden, daß nach der Umsetzung praktisch keine freien NCO-Gruppen mehr nachweisbar sind. Im allgemeinen werden die Mengenverhältnisse im Rahmen der obengemachten Offenbarung hierbei so bemessen, daß ein Äquivalentverhältnis von Isocyanatgruppen zu gegenüber Isocyanatgruppen reaktionsfähigen Gruppen von 0,2:1 bis 0,9:1 vorliegt, wobei die freien Säuregruppen der Komponente c) nicht in die Berechnung dieses Äquivalentverhältnisses eingehen.

Die Umsetzung erfolgt vorzugsweise in Gegenwart von 0,01 bis 2,5 Gew.-%, bezogen auf Reaktionsgemisch, an geeigneten Katalysatoren. Falls als Komponente c) nicht bereits salzartige (neutralisierte) Aufbaukomponenten eingesetzt werden erfolgt die zumindest teilweise Neutralisation der eingebauten, zur Salzbildung befähigten Gruppen während der Umsetzung oder vor, während und/oder nach dem Dispergier- bzw. Löseschritt in Wasser durch Zugabe einer Base. Der Neutralisationsgrad liegt hierbei bei 20 bis 100, vorzugsweise 50 bis 100 %, bezogen auf die eingebauten Säuregruppen, insbesondere Carboxylgruppen. Das gegebenenfalls mitverwendete Lösungsmittel kann vor, während oder nach dem Dispergier- bzw. Löseschritt gewünschtenfalls teilweise oder vollständig destillativ, gegebenenfalls azeotrop und/oder im Vakuum, und/oder unter Verwendung eines Inertgasstroms entfernt werden.

Geeignete Lösungsmittel sind z.B. N-Methylpyrrolidon, Diethylenglykoldimethylether, Methylethylketon, Methylisobutylketon, Aceton, Toluol, Xylol, Butylacetat, Methoxypropylacetat bzw. Gemische dieser oder anderer nicht NCO-reaktiver Lösemittel.

Geeignete Katalysatoren für die Urethanisierungsreaktion sind z.B. tertiäre Amine, wie z.B. Triethylamin, Zinnverbindungen wie z.B. Zinn-II-octoat, Dibutylzinnoxid, Dibutylzinndilaurat und andere gebräuchliche Katalysatoren.

Geeignete Basen sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Triisopropanolamin, 2-Diethylamino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugte Neutralisationsmittel sind Ammoniak und Dimethylethanolamin.

Nach der Urethanisierungsreaktion können zur Erzielung bestimmter Eigenschaften auch geringe Mengen anderer organischer Lösemittel, wie z.B. Ethanol, Propanol, Butanol, Butylglykol, Hexanol, Octanol, Butyldiglykol, Ethyldiglykol, Methyldiglykol und Methoxypropanol, zugesetzt werden. Im Dispergierschritt kann alternativ das Wasser/Neutralisationsmittelgemisch zum Harz, das Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harze in Wasser kann gewünschtenfalls durch Mitverwendung von externen Emulgatoren, wie z.B. ethoxyliertes Nonylphenol, beim Dispergieren verbessert werden. Der Dispergierschritt wird üblicherweise bei 40 bis 120°C durchgeführt.

In den erfindungsgemäßen Bindemittelkombinationen liegen die wäßrigen Polyesterpolyurethandispersionen in Kombination mit Vernetzerharzen B) der bereits oben angesprochenen Art vor.

Bei den als Vernetzerharz in Betracht kommenden hydrophoben Polyisocyanaten mit freien Isocyanatgruppen B1) handelt es sich um beliebige organische Polyisocyanate mit einem NCO-Gehalt von 5 bis 26 % mit aliphatisch, cycloaliphatisch, araliphatisch und/oder aromatisch gebundenen, freien Isocyanatgruppen, die bei Raumtemperatur flüssig sind. Die Polyisocyanatkomponente B1) weist bei 23°C im allgemeinen eine Viskosität von 50 bis 5 000 mPa.s auf. Bevorzugt handelt es sich ver der Polyisocyanatkomponente um Polyisocyanate oder Polyisocyanatgemische mit ausschließlich aliphatisch und/oder cycloaliphatisch gebundenen Isocyanatgruppen einer zwischen 1,8 und 5,0 liegenden (mittleren) NCO-Funktionalität und einer bevorzugten Viskosität bei 23°C von 50 bis 3 000 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf Bindemittel vorliegt.

Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Sehr gut geeignet sind beispielsweise "Lackpolyisocyanate" auf Basis von Hexamethylendiisocyanat oder von 1-Isocyanato-3,3,5-trimethyl-5-isocyanatomethylcyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekanten Biuret-, Urethan-, Uretdion-, Allophanat- und/oder Isocyanuratgruppen aufweisenden Derivate dieser Diisocyanate zu verstehen, die im Anschluß an ihre Herstellung in bekannter Weise, vorzugsweise durch Destillation, von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 31 24 605, 33 58 010, 39 03 126, 39 03 127 oder 39 76 622 erhalten werden können, und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 43 24 879 erhalten werden können, und die im wesentlichen aus N,N',N"-Tris-(6-isocyanatohexyl)-isocyanurat im Gemisch mit untergeordneten Mengen an seinen höheren Homologen bestehen.

Insbesondere bevorzugt werden den genannten Kriterien entsprechende Gemische aus Uretdion-, Allophanat- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanato-toluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen, monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen. Die Polyisocyanatkomponente B1) kann im übrigen aus beliebigen Gemischen der beispielhaft genannten Polyisocyanate bestehen.

Bei der Polyisocyanatkomponente B2) handelt es sich um hydrophil modifizierte Polyisocyanate. Hierbei sind vor allem Lackpolyisocyanate der bereits oben angesprochenen Art, insbesondere Isocyanuratgruppen aufweisende Lackpolyisocyanate auf HDI-Basis zu verstehen, die durch Umsetzung mit einer unterschüssigen Menge an einwertigen, hydrophilen Polyetheralkoholen hydrophil modifiziert worden sind. Diese hydrophilierten Polyisocyanate weisen im allgemeinen einen NCO-Gehalt von 4 bis 24 Gew.-% und einen Gehalt an innerhalb von Polyetherketten mit 6 bis 60 Kettengliedern angeordneten Ethylenoxideinheiten von 4 bis 30 Gew.-% auf. Die Herstellung derartiger, hydrophilierter Lackpolyisocyanate, deren hydrophilen Polyetherketten praktisch ausschließlich aus Ethylenoxideinheiten bestehen, ist beispielsweise in US-A 4 663 377 oder in EP-A-540 985 beschrieben.

Bei der Vernetzerkomponente B3) handelt es sich um Gemische der unter B1) und B2) genannten Polyisocyanate. In diesen Gemischen liegt im allgemeinen das Gewichtsverhältnis B1) : B2) bei 0,2:1 bis 5:1. "Gemische" bedeutet in diesem Zusammenhang, daß es sich um Gemische von nicht hydrophil modifizierten Polyisocyanaten B1) mit separat hergestellten hydrophilierten Polyisocyanaten B2) handelt. Der Begriff "Gemisch" bezieht sich somit nicht auf den Umstand, daß bei der hydrophilen Modifizierung zur Herstellung der Polyisocyanate B2) im allgemeinen nur ein Teil der zu modifizierenden Polyisocyanate mit der hydrophilen Modifizierungskomponente (einwertigem Polyetheralkohol) abreagiert, so daß im allgemeinen die Komponente B2) selbst ein "Gemisch" aus echtem Umsetzungsprodukt mit nicht modifiziertem Polyisocyanat darstellt.

Bei der Vernetzerkomponente B4) handelt es sich um Polyisocyanate der unter B1) bis B3) genannten Art mit durch Blockierungsmittel für Isocyanatgruppen blockierten Isocyanatgruppen. Geeignete Blockierungsmittel sind beispielsweise einwertige Alkohole wie Methanol, Ethanol, n-Butanol, Cyclohexanol, Benzylalkohol, Oxime wie Acetonoxim, Methylethylketoxim, Lactame wie ε-Caprolactam, H-aktive Verbindungen wie Malonsäurediethylester oder Acetessigsäureethylester, Phenole oder heterocyclische Blockierungsmittel der an sich bekannten Art.

Bei den Vernetzerharzen B5) handelt es sich beispielsweise um wasserverdünnbare bzw. -dispergierbare Melamin- bzw. Harnstoff-Formaldehyd-Kondensationsprodukte, wie sie z.B. bei D.H. Solomon, The Chemistry of Organic Filmformers, S. 235 ff., John Wiley & Sons, Inc., New York, 1967 beschrieben sind. Die Melaminharze können jedoch auch ganz oder teilweise durch andere vernetzende Aminoplaste, wie sie z.B. in "Methoden der organischen Chemie" (Houben-Weyl), Bd. 14/2, Teil 2, 4. Auflage, Georg Thieme Verlag, Stuttgart 1963, S. 319 ff., beschrieben sind, ersetzt werden.

Bei der Vernetzerharzkomponente B6) handelt es sich um Gemische von blockierten Polyisocyanaten B4) mit Melaminharzen B5). Im Falle der Verwendung von derartigen Gemischen liegt das Gewichtsverhältnis B4) : B5) im allgemeinen bei 0,2:1 bis 5:1.

Besonders bevorzugt werden in den erfindungsgemäßen Bindemittelkombinationen Polyisocyanate mit freien Isocyanatgruppen der unter B1) bis B3) genannten Art eingesetzt. Eine hydrophile Modifizierung der Polyisocyanate ist, wie ausgeführt, möglich jedoch nicht immer erforderlich, weil das gelöste bzw. dispergierte Polyesterpolyurethanharz gleichzeitig die Funktion eines Emulgators für das zugesetzte Polyisocyanat übernehmen kann. Diese Funktion kann auch durch Mitverwendung von externen Emulgatoren unterstützt werden. Diese Ausführungen gelten selbstverständlich ebenfalls im Falle der Verwendung von hydrophoben Vernetzerkomponenten B4) und/oder B5).

Vorzugsweise bestehen die Vernetzer B) ausschließlich aus Polyisocyanaten B1) und/oder B2) mit freien Isocyanatgruppen. In diesem Falle und auch in dem weniger bevorzugten Fall der Verwendung von blockierten Polyisocyanaten B4) werden die Mengenverhältnisse der Komponenten A) und B) so bemessen, daß ein NCO/OH-Äquivalentverhältnis, bezogen auf die (gegebenenfalls blockierten) Isocyanatgruppen der Komponente B) und die alkoholische Hydroxylgruppe der Komponente A) von 0,5:1 bis 5:1, vorzugsweise 0,8:1 bis 2:1 resultiert. Die Herstellung der gebrauchsfertigen Bindemittelkombinationen erfolgt durch einfaches Verrühren der Komponenten A) und B) bei Raumtemperatur, gegebenenfalls unter Einsatz geeigneter Misch- bzw. Dispergiergeräte.

Bei der Herstellung der wäßrigen Bindemittelkombinationen werden die beispielhaft genannten Hilfslösungsmittel in solchen Mengen mitverwendet, bzw. im Anschluß an die Herstellung der wäßrigen Dispersionen A) so weit destillativ entfernt, daß in den letztendlich erhaltenen Bindemittelkombinationen maximal 20 Gew.-%, vorzugsweise maximal 10. Gew.-% an organischen Lösungsmitteln vorliegen.

Vor, während oder nach der Herstellung der wäßrigen Bindemittelkombinationen durch Abmischung der Einzelkomponenten A) und B) und auch im Fall der Herstellung von einkomponentig zu verarbeitenden Beschichtungsmitteln, z.B. unter Verwendung erfindungsgemäßer Dispersionen lufttrocknender Polyesterurethane können die üblichen Hilfs- und Zusatzmittel der Lacktechnologie zugesetzt werden, wie z.B. Entschäumungsmittel, Verdickungsmittel, Verlaufshilfsmittel, Pigmente, Dispergierhilfsmittel, Katalysatoren, Hautverhinderungsmittel, Antiabsetzmittel, Sikkative, Emulgatoren. Die so erhaltenen erfindungsgemäßen Beschichtungsmittel eignen sich für alle Einsatzgebiete, in denen lösemittelhaltige, lösemittelfreie oder andersartige wäßrige Anstrich- und Beschichtungssysteme mit einem erhöhten Eigenschaftsprofil Verwendung finden, z.B. Beschichtung praktisch aller mineralischer Baustoff-Oberflächen wie Kalk- und/oder Zement gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier, Lackierung und Beschichtung metallischer Oberflächen; Beschichtung und Lackierung asphalt- oder bitumenhaltiger Straßenbeläge, Lackierung und Versiegelung diverser Kunststoffoberflächen. Bei den unter erfindungsgemäßer Verwendung der erfindungsgemäßen Bindemittelkombinationen hergestellten Lacken bzw. Beschichtungsmitteln handelt es sich um solche der unterschiedlichsten Art, wie beispielsweise Grundierungen, Füller, pigmentierte oder transparente Decklacke, die in der Einzel- und Serienapplikation, z.B. im Bereich der Industrielackierung, Automobil-Erst- und -Reparaturlackierung, Anwendung finden können.

Die Herstellung der Beschichtungen kann insbesondere nach den unterschiedlichsten Spritzverfahren wie beispielsweise Luftdruck-, Airless- oder Elektrostatik-Spritzverfahren unter Verwendung von Ein- oder gegebenenfalls Zweikomponenten-Spritzanlage erfolgen. Die erfindungsgemäß herzustellenden und zu verwendenden Lacke und Beschichtungsmassen können jedoch auch nach anderen Methoden, beispielsweise durch Streichen, Rollen oder Rakeln appliziert werden.

In den nachfolgenden Beispielen beziehen sich alle Prozentangaben, falls nicht anders angegeben, auf Gewichtsprozente. In allen Beispielen wurde unter Inertgas (Stickstoff) gearbeitet. Alle Angaben bezüglich der Hydroxyl- und Säurezahlen beziehen sich auf mg KOH/g Substanz.

### Beispiel 1

### Herstellung eines Polyesterpolyols a)

In ein 5-1-Rührgefäß mit Rühr-, Kühl- und Heizvorrichtung werden 328 g Phthalsäureanhydrid, 368 g Isophthalsäure, 1 207 g Pentaerythrit, 2 484 g Sojaölfettsäure und 660 g tert.-Butylbenzoesäure eingewogen, in 6 Stunden auf 210°C aufgeheizt und so lange kondensiert, bis die Säurezahl ca. 2,5 Substanz beträgt. Die OH-Zahl dieser Polyestervorstufe a) beträgt 167.

Herstellung einer erfindungsgemäßen, Lackhilfsmittel enthaltenden einkomponentig zu verarbeitenden Polyesterpolyurethandispersion

In ein 3-l-Reaktionsgefäß mit Rühr-, Kühl- und Heizvorrichtung werden 750 g der obengenannten Polyestervorstufe a), 59 g Dimethylolpropionsäure, 145 g N-Methylpyrrolidon (NNP) und 24,5 g Triethylamin eingewogen und bei 80°C homogenisiert. Dann werden 160 g eines Gemischs aus 80 % 1-Methyl-2,4-diisocyanatocyclohexan und 20 % 1-Methyl-2,6-diisocyanatocyclohexan (nachstehend "H₆TDI") auf einmal unter Rühren zugegeben und der Ansatz unter Ausnutzung der Exothermie auf 110°C aufgeheizt. Es wird so lange gerührt, bis keine NCO-Gruppen mehr nachgewiesen werden können (IR-spektroskopisch). In diese ca. 87 %ige Harzlösung werden 9 g Emulgator NP 20 (ethoxyliertes Nonylphenol, Hersteller: Bayer AG), 5,4 g Kobaltoctoat und 23,5 g Bleioctoat gegeben, homogenisiert und auf 100°C abgekühlt. Die Harzlösung wird anschließend in 1 250 g Wasser dispergiert. Die Mischtemperatur beträgt ca. 60°C. Nach Zugabe von 13 g des Hautverhinderungsmittels ^{®}Ascinin R conz. (Bayer AG), erhält man eine 41 %ige wäßrige Dispersion eines Polyesterpolyurethans der OH-Zahl 88 und der Säurezahl 32, welche eine Viskosität von 870 mPa.s bei 23°C aufweist.

### Beispiel 2

787 g der Polyestervorstufe a) aus Beispiel 1, 58 g Dimethylolpropionsäure, 149 g NMP und 24 g Triethylamin werden, wie in Beispiel 1 beschrieben, mit 155 g H₆TDI zur Reaktion gebracht, dann mit 9,3 g Emulgator NP 20, 5,6 g Kobaltoctoat und 24,4 g Bleioctoat versetzt und in 1 050 g Wasser dispergiert. Nach Zugabe von 14 g des Hautverhinderungsmittels Ascinin R conz., erhält man eine ca. 45 %ige wäßrige Dispersion eines Polyesterpolyurethans der OH-Zahl 84 und der Säurezahl 30, welche eine Viskosität von 710 mPa.s bei 23°C aufweist.

### Beispiel 3 (Vergleichsbeispiel)

In einen 4-l-Reaktionsgefäß werden, wie in Beispiel 1 beschrieben, 1 120 g Polyester-Vorstufe a), 87,5 g Dimethylolpropionsäure, 224 g NMP und 36,5 g Triethylamin homogenisiert und mit 292 g IPDI zur Reaktion gebracht. Anschließend werden 14,4 g Emulgator NP 20, 8,6 g Kobaltoctoat und 37,8 g Bleioctoat zugegeben und homogenisiert. Nach Zugabe von 1 650 g Wasser, erhält man eine ca. 45 %ige wäßrige Dispersion eines Polyesterpolyurethans der OH-Zahl 80 und der Säurezahl 30, welche eine Viskosität von 800 mPa.s bei 23°C aufweist.

Unter Verwendung der Dispersionen der Beispiele 1 bis 3 wurden mit Hilfe von Titandioxid (Bindemittel-Pigmentverhältnis 100:80) lufttrocknende Weißlacke hergestellt. Folgende Kenndaten bzw. Prüfergebnisse wurden erhalten:

| | Beispiel 1 | Beispiel 2 | Vergleichsbeispiel 3 |
|---|---|---|---|
| Kenndaten wäßrige Dispersion | | | |
| Festkörper | 41 % | 45 % | 45 % |
| Viskosität (23°C) | 870 mPa.s | 710 mPa.s | 800 mPa.s |
| SZ (100 %ig) | 32 | 30 | 30 |

| Lackkenndaten | | | |
|---|---|---|---|
| Viskosität, DIN-4-Becher, 23°C | 67 s | 85 s | 80 s |
| Festkörpergehalt | 55 % | 58 % | 59 % |

| Lackeigenschaften | | | |
|---|---|---|---|
| Trocknungszeit bei RT¹ | 4 h | 8 h | 8 h |
| Pendelhärte nach (nach 16 h, RT) | 24 s | 17 s | 20 s |
| DIN 53 157 (nach 45 h, RT) | 45 s | 30 s | 30 s |
| Wasserfestigkeit²(Belastung 24 h) (nach 16 h, RT) | 1-2 | 2 | 3 |

| Viskositätsstabilität des Lackes | | | |
|---|---|---|---|
| (Lagerung bei RT, Pendelhärte nach DIN 53157) | | | |
| Anfang | 67 s | 85 s | 80 s |
| 10 Tage | 66 s | 83 s | 74 s |
| 1 Monat | 67 s | 82 s | 63 s |
| 2 Monate | 67 s | 83 s | 58 s |
| 3 Monate | 66 s | 83 s | 49 s |

| | | | |
|---|---|---|---|
| ¹ RT = Raumtemperatur | | | |
| ² Werte von 0-5; 0 = ausgezeichnet, 2 = gut, 5 = schlecht | | | |

Die Ergebnisse zeigen, daß bei vergleichbaren Kenndaten der wäßrigen Dispersionen bzw. der Lacke und auch bei in etwa vergleichbaren Lackeigenschaften, die erfindungsgemäßen Beispiele 1) und 2) eine ausgezeichnete Lagerstabilität (gemessen an der Lackviskosität im DIN-4-Becher bei 23°C als Auslaufzeit) besitzen, während für Vergleichsbeispiel 3) im Laufe der Lagerung ein erheblicher Viskositätsabbau zu verzeichnen ist.

### Beispiel 4

### Herstellung einer Polyestervorstufe a)

In einem 15-l-Reaktionsgefäß mit Rühr-, Kühl-, Heizvorrichtung und Wasserabscheider werden 1 606 g Trimethylolpropan, 6 169 g Phthalsäureanhydrid, 1 039 g Stearinsäure, 3 000 g Neopentylglykol und 1 700 g 1,6-Hexandiol eingewogen, in 7 Stunden auf 210°C aufgeheizt und so lange kondensiert, bis eine Säurezahl <3 mg KOH/g Substanz erreicht ist. Die so erhaltene Polyester-vorstufe a) hat eine OH-Zahl von 158 mg KOH/g Substanz.

### Herstellung einer erfindungsgemäßen Polyesterpolyurethan-Dispersion A)

In ein 6-1-Reaktionsgefäß mit Rühr-, Kühl- und Heizvorrichtung werden 2 105 g der Polyestervorstufe 4a), 100 g Dimethylolpropionsäure, 3,1 g ®Desmorapid SO (Zinn(II)octoat, Bayer AG) und 375 g Xylol eingewogen und bei 90°C homogenisiert. Dann werden 294,8 g H₆TDI auf einmal zugegeben und unter Ausnutzung der Exothermie bis auf 130°C erwärmt. Es wird solange gerührt, bis keine NCO-Gruppen mehr nachgewiesen werden können. Dann werden 61,3 g Dimethylethanolamin zugegeben und in 3 150 g Wasser dispergiert. Man erhält eine 42 %ige, wäßrige Dispersion eines Polyesterpolyurethans der OH-Zahl 89 und der Säurezahl 20, welche eine Viskosität von 330 mPa.s bei 23°C aufweist.

### Beispiel 5 (Vergleichsbeispiel)

1 614 g der obengenannten Polyestervorstufe 4a), 80 g Dimethylolpropionsäure, 2,6 g Desmorapid SO und 300 g Xylol werden, wie in Beispiel 4 beschrieben, mit 306 g IPDI umgesetzt. Nach Zugabe von 47 g Dimethylethanolamin wird in 2 500 g Wasser dispergiert. Man erhält eine 42 %ige, wäßrige Dispersion eines Polyesterpolyurethans der OH-Zahl 86 und der Säurezahl 20, welche eine Visksoität von 280 mPa.s bei 23°C aufweist.

Die gemäß Beispiel 4 bzw. Vergleichsbeispiel 5 erhaltenen Dispersionen wurden in wäßrigen 2K-PUR-Lacken in Kombination mit einem Polyisocyanatgemisch, bestehend zu gleichen Gewichtsteilen aus einem mit einem einwertigen Polyetheralkohol hydrophilierten HDI-Trimerisat mit einem NCO-Gehalt von 17 % (^{®}Bayhydur VP LS 2032, Hersteller: Bayer AG) und einem unmodifizierten HDI-Trimerisat mit einem NCO-Gehalt von 22 % (®Desmodur VP LS 2025, Hersteller: Bayer AG) in pigmentierten Lacken (Pigmente: Eisenoxid, Zinkphosphat, Pigmentvolumenkonzentration 45 %) für die Metallbeschichtung geprüft. Das NCO/OH-Äquivalentverhältnis lag bei 1,5:1. Folgende Kenndaten und Ergebnisse wurden erhalten:

| | Beispiel 4 | Vergleichsbeispiel 5 |
|---|---|---|
| Kenndaten wäßrige Dispersion: | | |
| Festkörpergehalt | 42 % | 42 % |
| Viskosität (23°C) | 330 mPa.s | 280 mPa.s |
| SZ (mg KOH/g) (100 %ig) | 20 | 20 |
| Festkörpergehalt Lack | 53 % | 53 % |

| Lackeigenschaften | | |
|---|---|---|
| Klebfrei-Trocknung bei RT | 25 Min. | 25 Min. |
| Pendelhärte nach 1 Tag Trocknung bei RT | 105 sek. | 104 sek. |
| Wasserfestigkeit nach 1 Tag Trocknung bei RT (12 h Belastung) | o.B. | o.B. |
| Lösemittelbeständigkeit nach 1 Tag Trocknung bei RT | gut | gut |
| Kondenwassertest nach 7 Tagen Trocknung bei RT (42 Tage Belastung als Decklack) | o.B. | o.B. |
| Verarbeitungszeit | >6 Stunden | 3 Stunden |
| (o.B.: ohne Befund) | | |

Die Ergebnisse zeigen, daß bei vergleichbaren Kenndaten der Dispersionen bzw. der Lacke und bei identischen Lackfilmeigenschaften das erfindungsgemäße Beispiel 4 eine wesentlich längere Verarbeitungszeit (bestimmt anhand des Viskositätsanstiegs bis zu der Grenze, wo keine Verarbeitbarkeit mehr besteht, bzw. der Ansatz vernetzt ist) als das Vergleichsbeispiel 5 aufweist. Diese Eigenschaft ist für eine Reihe von Praxisanwendungen von ausschlaggebender Bedeutung.

### Beispiel 6

### Herstellung einer Polyestervorstufe a)

In einem 5-1-Reaktionsgefäß mit Rühr-, Kühl-, Heizvorrichtung und Wasserabscheider werden 1 119 g Trimethylolpropan, 977 Neopentylglykol, 2 443 g Hexahydrophthalsäureanhydrid und 246 g Hexandiol-1,6 eingewogen, in 7 Stunden auf 210°C aufgeheizt und so lange kondensiert, bis eine Säurezahl <3 mg KOH/g Substanz erreicht ist. Die so erhaltene Polyestervorstufe a) hat eine OH-Zahl von 199.

### Herstellung einer Polyesterpolyurethandispersion A)

In ein 4-1-Reaktionsgefäß mit Rühr-, Kühl- und Heizvorrichtung werden 1 133 g Polyestervorstufe a), 41,3 g eines linearen, aliphatischen Polyester-Polycarbonats (^{®}Desmophen C 200, OH-Zahl 56 mg KOH/g Substanz, Bayer AG), 31,5 g Trimethylolpropan, 90 g Dimethylolpropionsäure, 1,9 g Desmorapid SO und 167 g NMP eingewogen, auf 100°C erhitzt und homogenisiert. Dann werden 204 g H₆TDI auf einmal zugegeben. Es wird so lange gerührt, bis keine NCO-Gruppe mehr nachgewiesen werden kann. Dann werden 48,5 g Dimethylethanolamin zugegeben und in 1 900 g Wasser dispergiert. Man erhält eine 42 %ige, wäßrige Dispersion eines Polyesterpolyurethans der OH-Zahl 142 und der Säurezahl 26, welche eine Viskosität von 770 mPa.s bei 23°C aufweist.

### Beispiel 7 (Vergleichsbeispiel)

1 136 g Polyestervorstufe 6a), 41,3 g Desmophen C 200, 33 g Trimethylolpropan, 90 g Dimethylolpropionsäure, 1,9 g Desmorapid SO und 167 g NMP werden, wie in Beispiel 6) beschrieben, mit 200 g HDI zur Reaktion gebracht. Das Reaktionsprodukt wird mit 48,5 g Dimethylethanolamin versetzt und in 1 800 g Wasser dispergiert. Man erhält eine 43 %ige wäßrige Dispersion eines Polyesterpolyurethans der OH-Zahl 142 und der Säurezahl 27, welche eine Viskosität von ca. 680 mPa.s bei 23°C aufweist.

Die gemäß Beispiel 6 und Vergleichsbeispiel 7 erhaltenen Dispersionen wurden im Verhältnis 75:25 mit einem Melaminharz (^{®}Cymel 325, American Cyanamid) zu einem Einbrennklarlack kombiniert und durch Zugabe von Wasser auf eine Applikationsviskosität von 50 Sekunden (Auslaufzeit, DIN-4-Becher, 23°C) eingestellt.

Die bei 150°C für 30 Minuten ausgehärteten Filme zeigten vergleichbare Ergebnisse in Filmoptik und Chemikalienbeständigkeit. Die Filme gemäß Beispiel 6 hatten eine etwas höhere Härte als die Filme gemäß Beispiel 7, die dafür eine etwas bessere Elastizität aufwiesen. In der Viskositätsstabilität der gelagerten Klarlacke traten erhebliche Unterschiede auf. Der gemäß Beispiel 6 hergestellte Klarlack zeigte bei 6 Monaten Lagerung bei Raumtemperatur lediglich einen Viskositätsabfall von 50 auf 44 Sekunden und war damit immer noch gebrauchsfertig. Der gemäß Vergleichsbeispiel 7 hergestellte Klarlack zeigte dagegen einen erheblichen Viskositätsabfall von 50 auf 19 Sekunden und war damit ohne Nachbehandlung nicht mehr einsetzbar.

## Patentansprüche

1. 20 bis 60 gew.-%ige wäßrige Dispersion mit einer Viskosität bei 23°C von 10 bis 20 000 mPa.s und einem pH-Wert von 5,5 bis 10 eines Polyesterpolyurethans mit einem Molekulargewicht Mw von 1 500 bis 100 000, einer Hydroxylzahl von 20 bis 300 mg KOH/g, einem, einer Säurezahl von 7 bis 70 mg KOH/g entsprechenden Gehalt an, zu 20 bis 100 % neutralisiert als Carboxylatgruppen vorliegenden, Carboxylgruppen und einem Gehalt an Urethangruppen (berechnet als -NH-CO-O-, Molekulargewicht = 59) von 2,5 bis 15 Gew.-%, wobei das Polyesterpolyurethan das zumindest teilweise in der Salzform vorliegende mit Basen neutralisierte Umsetzungsprodukt darstellt von
a) 50 bis 91 Gew.-% einer Polyesterkomponente, bestehend aus mindestens einem Polyesterpolyol des Hydroxylzahlbereichs 25 bis 350,
b) 7 bis 45 Gew.-% einer Polyisocyanat-Komponente, besteht zumindest zu 50 Gew.-% aus 1-Methyl-2,4- und/oder -2,6-diisocyanatocyclohexan und zum Rest aus anderen organischen Polyisocyanaten des Molekulargewichtsbereichs 140 bis 1 500
und
c) 2 bis 12 Gew.-% einer (potentiell) anionischen Aufbaukomponente, bestehend aus mindestens einer Verbindung mit mindestens einer gegenüber NCO-Gruppen reaktionsfähigen Gruppe und mindestens einer, gegebenenfalls zumindest teilweise neutralisiert vorliegenden, zur Salzbildung befähigten Gruppe
und gegebenenfalls
d) 0 bis 10 Gew.-% einer nichtionisch-hydrophilen Aufbaukomponente, bestehend aus mindestens einer im Sinne der Isocyanat-Additionsreaktion mono- oder difunktionellen, mindestens eine hydrophile Polyetherkette aufweisenden Verbindung
und/oder gegebenenfalls
e) 0 bis 30 Gew.-% an anderen, von den Komponenten a), c) und d) verschiedenen Aufbaukomponenten mit gegenüber Isocyanatgruppen reaktionsfähigen Wasserstoffatomen des Molekulargewichtsbereichs 62 bis 2 500,
wobei sich die genannten Prozentangaben zu 100 ergänzen.

2. Wäßrige Dispersion gemäß Anspruch 1, dadurch gekennzeichnet, daß das dispergierte Polyesterpolyurethan lufttrocknende Eigenschaften und eine Iodzahl von 20 bis 95 aufweist und das Umsetzungsprodukt darstellt aus
a) 68 bis 88 Gew.-% eines Polyesterpolyols, welches das Umsetzungsprodukt ist von
a1) 25 bis 65 Gew.-% einer Monocarbonsäure-Komponente, bestehend zumindest zu 75 Gew.-% aus mindestens einer zur oxidativen Trocknung befähigten Fettsäure und zum Rest aus anderen Monocarbonsäuren,
a2) 10 bis 45 Gew.-% einer Polycarbonsäurekomponente, bestehend aus mindestens einer Di-, Tri- und/oder Tetracarbonsäure des Molekulargewichtsbereichs 98 bis 840 und/oder aus mindestens einem Anhydrid einer derartigen Polycarbonsäure
und
a3) 12 bis 40 Gew.-% einer Polyolkomponente, bestehend aus mindestens einem 2- bis 4-wertigen Alkohol des Molekulargewichtsbereichs 62 bis 200,
b) 8 bis 23 Gew.-% einer Polyisocyanatkomponente, bestehend zumindest zu 75 Gew.-% aus 1-Methyl-2,4- und/oder -2,6-diisocyanatocyclohexan und zum Rest aus anderen Polyisocyanaten des Molekulargewichtsbereichs 174 bis 318,
c) 4 bis 8 Gew.-% Dimethylolpropionsäure
und gegebenenfalls
e) 0 bis 10 Gew.-% einer Aufbaukomponente, bestehend aus mindestens einer, von den Verbindungen gemäß a) und c) verschiedenen, Hydroxyl- und/oder Aminogruppen aufweisenden Verbindung des Molekulargewichtsbereichs 62 bis 1 200,
wobei sich die unter a1) bis a3) einerseits und die unter a) bis e) andererseits genannten Prozentangaben jeweils zu 100 ergänzen.

3. Wäßrige Dispersion gemäß Anspruch 1, dadurch gekennzeichnet, daß das dispergierte Polyesterpolyurethan ein Umsetzungsprodukt ist von
a) 68 bis 88 Gew.-% mindestens eines Polyesterpolyols, welches das Umsetzungsprodukt ist von
a1) 0 bis 24 Gew.-% einer Monocarbonsäurekomponente, bestehend zumindest zu 50 Gew.-% aus aromatischen oder gesättigten (cyclo)aliphatischen Monocarbonsäuren mit 6 bis 22 Kohlenstoffatomen und zum Rest aus ungesättigten aliphatischen Monocarbonsäuren,
a2) 15 bis 60 Gew.-% einer Polycarbonsäurekomponente, bestehend aus mindestens einer Di-, Tri- oder Tetracarbonsäure des Molekulargewichtsbereichs 98 bis 840 und/oder aus mindestens einem Anhydrid einer derartigen Säure und
a3) 22 bis 63 Gew.-% einer Polyolkomponente, bestehend aus mindestens einem 2- bis 4-wertigen Alkohol des Molekulargewichtsbereichs 62 bis 200,
b) 8 bis 23 Gew.-% einer Polyisocyanatkomponente, bestehend zumindest zu 75 Gew.-% aus 1-Methyl-2,4- und/oder -2,6-diisocyanatocyclohexan und zum Rest aus anderen Polyisocyanaten des Molekulargewichtsbereichs 168 bis 318,
c) 3 bis 9 Gew.-% Dimethylolpropionsäure
und gegebenenfalls
e) 0 bis 7,5 Gew.-% einer Aufbaukomponente, bestehend aus mindestens einer, von den Verbindungen gemäß a) und c) verschiedenen, Hydroxyl- und/oder Aminogruppen aufweisenden Verbindung des Molekulargewichtsbereichs 62 bis 1 200,
wobei sich die unter a1) bis a3) einerseits und die unter a) bis e) andererseits genannten Prozentangaben jeweils zu 100 ergänzen.

4. Verwendung der wäßrigen Dispersionen, gemäß Anspruch 1 bis 3, gegebenenfalls in Kombination mit Vernetzerharzen als/oder zur Herstellung von 1- oder 2-komponentig zu verarbeitenden Beschichtungsmitteln.

5. Wäßrige Bindemittelkombination bestehend im wesentlichen aus
A) einer wäßrigen Dispersion eines Polyesterpolyurethans gemäß Anspruch 1 bis 3 und
B) einer Härterkomponente, ausgewählt aus der Gruppe bestehend aus
B1) hydrophoben Polyisocyanaten mit einer Viskosität bei 23°C von 25 bis 5 000 mPa.s und einem NCO-Gehalt von 5 bis 26 Gew.-%,
B2) eingebaute hydrophile Polyetherketten enthaltenden, hydrophilen Polyisocyanaten mit einem NCO-Gehalt von 4 bis 24 Gew.-%,
B3) Gemischen der unter B1) und B2) genannten Polyisocyanate,
B4) Polyisocyanate der unter B1) bis B3) genannten Art mit durch Blockierungsmitteln für Isocyanatgruppen blockierten Isocyanatgruppen,
B5) Aminovernetzerharzen und
B6) Gemischen der unter B4) und B5) genannten Vernetzerharzen,
mit der Maßgabe, daß im Falle der Verwendung von gegebenenfalls blockierten Polyisocyanaten als alleinige Vernetzer das Äquivalentverhältnis von gegebenenfalls blockierten Isocyanatgruppen der Komponente B) zu Hydroxylgruppen der Komponente A) bei 0,5:1 bis 51 liegt.

## Claims

1. 20 to 60 wt.% aqueous dispersion, with a viscosity at 23°C of from 10 to 20,000 mPa.s and a pH value of from 5.5 to 10, of a polyester polyurethane with a molecular weight Mw of from 1500 to 100,000, a hydroxyl number of from 20 to 300 mg KOH/g, a content of carboxyl groups, of which from 20 to 100 % are present neutralized as carboxylate groups, corresponding to an acid number of from 7 to 70 mg KOH/g and a content of urethane groups (calculated as -NH-CO-O-, molecular weight = 59) of from 2.5 to 15 wt.%, the polyester polyurethane being the reaction product, present at least partly in the salt form neutralized with bases, of
a) from 50 to 91 wt.% of a polyester component, consisting of at least one polyester polyol with hydroxyl number in the range from 25 to 350,
b) from 7 to 45 wt.% of a polyisocyanate component, consisting of at least 50 wt.% 1-methyl-2,4-and/or -2,6-diisocyanatocyclohexane and for the rest of other organic polyisocyanates with molecular weights in the range from 140 to 1500
and
c) from 2 to 12 wt.% of a (potentially) anionic building component, consisting of at least one compound with at least one group reactive with NCO groups and at least one group capable of salt formation, optionally present in at least partly neutralized form, and optionally
d) from 0 to 10 wt.% of a non-ionic hydrophilic building component, consisting of at least one compound, mono- or difunctional for the purposes of the isocyanate addition reaction and having at least one hydrophilic polyether chain,
and/or optionally
e) from 0 to 30 wt.% of other building components, different from the components a), c) and d), with hydrogen atoms reactive with isocyanate groups and with molecular weight in the range from 62 to 2500,
the percentages mentioned totalling 100.

2. Aqueous dispersion according to Claim 1,
characterized in that the dispersed polyester polyurethane has air-drying properties and an iodine number of from 20 to 95 and is the reaction product of
a) from 68 to 88 wt.% of a polyester polyol which is the reaction product of
a1) from 25 to 65 wt.% of a monocarboxylic acid component, consisting of at least 75 wt.% of at least one fatty acid capable of oxidative drying and for the rest of other monocarboxylic acids,
a2) from 10 to 45 wt.% of a polycarboxylic acid component, consisting of at least one di-, tri- and/or tetra-carboxylic acid of molecular weight in the range from 98 to 840 and/or of at least one anhydride of such a polycarboxylic acid
and
a3) from 12 to 40 wt.% of a polyol component, consisting of at least one di- to tetrahydric alcohol of molecular weight in the range from 62 to 200,
b) from 8 to 23 wt.% of a polyisocyanate component, consisting of at least 75 wt.% 1-methyl-2,4-and/or -2,6-diisocyanatocyclohexane and for the rest of other polyisocyanates with molecular weight in the range from 174 to 318,
c) from 4 to 8 wt.% dimethylolpropionic acid
and optionally
e) from 0 to 10 wt.% of a building component, consisting of at least one compound, different from the compounds according to a) and c), having hydroxyl and/or amino groups and of molecular weight in the range from 62 to 1200,
the percentages mentioned under a1) to a3) on the one hand and under a) to e) on the other in each case totalling 100.

3. Aqueous dispersion according to Claim 1, characterized in that the dispersed polyester polyurethane is a reaction product of
a) from 68 to 88 wt.% of at least one polyester polyol which is the reaction product of
a1) from 0 to 24 wt.% of a monocarboxylic acid component, consisting of at least 50 wt.% of aromatic or saturated (cyclo)aliphatic monocarboxylic acids with from 6 to 22 carbon atoms and for the rest of unsaturated aliphatic monocarboxylic acids,
a2) from 15 to 60 wt.% of a polycarboxylic acid component, consisting of at least one di-, tri- or tetra-carboxylic acid of molecular weight in the range from 98 to 840 and/or of at least one anhydride of such an acid and
a3) from 22 to 63 wt.% of a polyol component, consisting of at least one di- to tetrahydric alcohol of molecular weight in the range from 62 to 200,
b) from 8 to 23 wt.% of a polyisocyanate component, consisting of at least 75 wt.% 1-methyl-2,4-and/or -2,6-diisocyanatocyclohexane and for the rest of other polyisocyanates of molecular weight in the range from 168 to 318,
c) from 3 to 9 wt.% dimethylolpropionic acid
and optionally
e) from 0 to 7.5 wt.% of a building component, consisting of at least one compound, different from the compounds according to a) and c), having hydroxyl and/or amino groups and of molecular weight in the range from 62 to 1200,
the percentages mentioned under a1) to a3) on the one hand and under a) to e) on the other in each case totalling 100.

4. Use of the aqueous dispersions according to Claims 1 to 3, optionally in combination with cross-linking agent resins, as/or for the manufacture of coating agents to be processed as one or two components.

5. Aqueous binder combination consisting substantially of
A) an aqueous dispersion of a polyester polyurethane according to Claims 1 to 3 and
B) a hardener component, selected from the group consisting of
B1) hydrophobic polyisocyanates with a viscosity at 23°C of from 25 to 5000 mPa.s and an NCO content of from 5 to 26 wt.%,
B2) hydrophilic polyisocyanates, containing incorporated hydrophilic polyether chains, with an NCO content of from 4 to 24 wt.%,
B3) mixtures of the polyisocyanates mentioned under B1) and B2),
B4) polyisocyanates of the kind mentioned under B1) to B3) with isocyanate groups blocked by means of blocking agents for isocyanate groups,
B5) amino cross-linking agent resins and
B6) mixtures of the cross-linking agent resins mentioned under B4) and B5),
provided that, in the case of the use of optionally blocked polyisocyanates as sole cross-linking agents, the equivalent ratio of optionally blocked isocyanate groups of component B) to hydroxyl groups of component A) is from 0.5:1 to 5:1.

## Revendications

1. Dispersion aqueuse à 20 - 60 % en poids possédant une viscosité à 23°C de 10 à 20.000 mPa.s et une valeur de pH de 5,5 à 10 d'un polyester-polyuréthanne possédant un poids moléculaire Mw de 1.500 à 100.000, un indice d'hydroxyle de 20 à 300 mg de KOH/g, une teneur en groupes carboxyle présents sous forme de groupes carboxylate neutralisés à concurrence de 20 à 100 %, correspondant à un indice d'acide de 7 à 70 mg de KOH/g et une teneur en groupes uréthanne (calculés comme groupes -NH-CO-O-, poids moléculaire = 59) de 2,5 à 15 % en poids, dans laquelle le polyester-polyuréthanne représente le produit réactionnel, neutralisé avec des bases et présent au moins en partie sous la forme saline, de
a) à concurrence de 50 à 91 % en poids, un composant de polyester constitué par au moins un polyester-polyol dont l'indice d'hydroxyle se situe dans le domaine de 25 à 350,
b) à concurrence de 7 à 45 % en poids, un composant de polyisocyanate, constitué à concurrence d'au moins 50 % en poids par du 1-méthyl-2,4- et/ou -2,6-diisocyanatocyclohexane et pour le reste par d'autres polyisocyanates organiques du domaine de poids moléculaire de 140 à 1.500
et
c) à concurrence de 2 à 12 % en poids, un composant de structure de type (potentiellement) anionique constitué par au moins un composé comprenant au moins un groupe apte à réagir vis-à-vis de groupes NCO et au moins un groupe approprié pour la salification, le cas échéant présent au moins en partie à l'état neutralisé,
et, le cas échéant,
d) à concurrence de 0 à 10 % en poids, un composant de structure de type non ionique-hydrophile constitué d'au moins un composé mono- ou difonctionnel dans le sens de la réaction d'addition d'isocyanate, présentant au moins une chaîne de polyéther hydrophile
et/ou, le cas échéant
e) à concurrence de 0 à 30 % en poids, d'autres composants de structure différents des composants a), c) et d) comprenant des atomes d'hydrogène aptes à réagir vis-à-vis de groupes isocyanate, du domaine de poids moléculaire de 62 à 2.500,
dans laquelle les indications en pour cent mentionnées se complètent pour donner 100.

2. Dispersion aqueuse selon la revendication 1, caractérisée en ce que le polyester-polyuréthanne mis en dispersion présente des propriétés de séchage à l'air et un indice d'iode de 20 à 95 et représente le produit réactionnel de
a) à concurrence de 68 à 88 % en poids, un polyester-polyol, à savoir le produit réactionnel de
a1) à concurrence de 25 à 65 % en, poids, un composant d'acide monocarboxylique constitué au moins à concurrence de 75 % en poids par au moins un acide gras apte à un séchage par oxydation et, pour le reste, par d'autres acides monocarboxyliques,
a2) à concurrence de 10 à 45 % en poids, un composant d'acide polycarboxylique constitué par au moins un acide di-, tri- et/ou tétracarboxylique du domaine de poids moléculaire de 98 à 840 et/ou par au moins un anhydride d'un acide polycarboxylique de ce type
et
a3) à concurrence de 12 à 40 % en poids, un composant de polyol constitué d'au moins un alcool di- à tétravalent du domaine de poids moléculaire de 62 à 200,
b) à concurrence de 8 à 23 % en poids, un composant de polyisocyanate constitué à concurrence d'au moins 75 % en poids par du 1-méthyl-2,4- et/ou -2,6-diisocyanatocyclohexane et pour le reste par d'autres polyisocyanates du domaine de poids moléculaire de 174 à 318,
c) à concurrence de 4 à 8 % en poids, de l'acide diméthylolpropionique
et, le cas échéant
e) à concurrence de 0 à 10 % en poids, un composant de structure constitué d'au moins un composé différent des composés selon a) et c) et présentant des groupes hydroxyle et/ou des groupes amino, du domaine de poids moléculaire de 62 à 1.200,
dans laquelle les indications en pour cent mentionnées sous a1) à a3) d'une part et sous a) à e) d'autre part se complètent respectivement pour donner 100.

3. Dispersion aqueuse selon la revendication 1, caractérisée en ce que le polyester-polyuréthanne mis en dispersion est un produit réactionnel de
a) à concurrence de 68 à 88 % en poids, au moins un polyester-polyol, à savoir le produit réactionnel de
a1) à concurrence de 0 à 24 % en poids, un composant d'acide monocarboxylique constitué au moins à concurrence de 50 % en poids par des acides monocarboxyliques aromatiques ou (cyclo)-aliphatiques saturés contenant de 6 à 22 atomes de carbone et, pour le reste, par des acides monocarboxyliques aliphatiques non saturés,
a2) à concurrence de 15 à 60 % en poids, un composant d'acide polycarboxylique constitué par au moins un acide di-, tri- ou tétracarboxylique du domaine de poids moléculaire de 98 à 840 et/ou par au moins un anhydride d'un acide de ce type
a3) à concurrence de 22 à 63 % en poids, un composant de polyol constitué d'au moins un alcool di- à tétravalent du domaine de poids moléculaire de 62 à 200,
b) à concurrence de 8 à 23 % en poids, un composant de polyisocyanate constitué à concurrence d'au moins 75 % en poids par du 1-méthyl-2,4- et/ou -2,6-diisocyanatocyclohexane et pour le reste par d'autres polyisocyanates du domaine de poids moléculaire de 168 à 318,
c) à concurrence de 3 à 9 % en poids, de l'acide diméthylolpropionique
et, le cas échéant
e) à concurrence de 0 à 7,5 % en poids, un composant de structure constitué d'au moins un composé différent des composés selon a) et c) et présentant des groupes hydroxyle et/ou des groupes amino, du domaine de poids moléculaire de 62 à 1.200,
dans laquelle les indications en pour cent mentionnées sous a1) à a3) d'une part et sous a) à e) d'autre part se complètent respectivement pour donner 100.

4. Utilisation des dispersions aqueuses selon les revendications 1 à 3, le cas échéant en combinaison avec des résines de réticulation sous forme de/ou pour la préparation d'agents d'enduction à traiter sous forme d'agents à 1 ou à 2 composants.

5. Combinaison aqueuse de liant constituée essentiellement par
A) une dispersion aqueuse d'un polyester-polyuréthanne selon les revendications 1 à 3 et
B) un composant de durcisseur choisi parmi le groupe constitué par
B1) des polyisocyanates hydrophobes possédant une viscosité à 23°C de 25 à 5.000 mPa.s et une teneur en groupes NCO de 5 à 26 % en poids,
B2) des polyisocyanates hydrophiles contenant des chaînes de polyéthers hydrophiles à l'état incorporé, possédant une teneur en groupes NCO de 4 à 24 % en poids,
B3) des mélanges des polyisocyanates mentionnés sous B1) et sous B2),
B4) des polyisocyanates du type mentionné sous B1) à B3) contenant des groupes isocyanate bloqués à l'aide d'agents de blocage pour des groupes isocyanate,
B5) des résines de réticulation contenant un ou plusieurs groupes amino,
B6) des mélanges des résines de réticulation mentionnées sous B4) et sous B5),
avec cette mesure que, dans le cas d'une utilisation de polyisocyanates le cas échéant bloqués à titre d'agent de réticulation unique, le rapport d'équivalence des groupes isocyanate le cas échéant bloqués du composant B) aux groupes hydroxyle du composant A) s'élève de 0,5:1 à 5:1.
